# FASCICULE DE BREVET EUROPEEN

(11) **EP 3 134 279 B1**
(45) Date de publication et mention de la délivrance du brevet: **04.12.2019**
(21) Numéro de dépôt: 15720642.6
(22) Date de dépôt: 22.04.2015
(51) Int. Cl.: B60C 9/00, B60C 9/20, D07B 1/06

(54) **PNEUMATIQUE POUR VÉHICULE INDUSTRIEL LOURD**
REIFEN FÜR SCHWERINDUSTRIEFAHRZEUG
TYRE FOR HEAVY INDUSTRIAL VEHICLE

(30) Priorité: 22.04.2014 FR 1453592
(43) Date de publication de la demande: 01.03.2017
(73) Titulaire: Compagnie Générale des Etablissements Michelin, 63000 Clermont-Ferrand (FR)
(72) Inventeur: CLEMENT, Emmanuel, F-63040 Clermont-Ferrand Cedex 9 (FR); DOMINGO, Alain, F-63040 Clermont-Ferrand Cedex 9 (FR); SEJALON, Olivier, F-63040 Clermont-Ferrand Cedex 9 (FR)
(74) Mandataire: Desbordes, Guillaume
(86) Numéro de dépôt international: PCT/EP2015/058712
(87) Numéro de publication internationale: WO 2015/162174

(56) Documents cités:
- WO-A1-02/090135
- WO-A1-2013/174896
- JP-A- H09 143 890

## Description

L'invention concerne un pneumatique, notamment pour véhicules de génie civil.

On connait de l'état de la technique un pneumatique pour véhicule de génie civil, à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend plusieurs nappes de caoutchouc, éventuellement renforcées par des éléments de renforts tels que des câbles métalliques.

L'armature de sommet comprend au moins deux nappes superposées, dites nappes de travail, dont les câbles de renfort sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 15° et 40° selon le type de pneu considéré.

L'armature de sommet comprend également une ou plusieurs nappes dites de protection chargées de protéger le reste de l'armature de sommet des agressions externes, notamment des perforations.

Dans ce type de pneumatique, l'armature de sommet peut également comprendre d'autres nappes, par exemple des nappes dites de frettage comportant des câbles orientés sensiblement selon la direction circonférentielle (également appelées nappes à zéro degré), qu'elles soient radialement externes ou internes par rapport aux nappes de travail.

Un tel pneumatique de véhicule industriel lourd est soumis à de nombreuses agressions. En effet, le roulage de ce type de pneumatique se fait habituellement sur un revêtement accidenté conduisant parfois à des perforations de la bande de roulement et d'une partie de l'armature de sommet, notamment des nappes de protection.

Ces perforations entrainent l'entrée d'agents corrosifs, par exemple l'air et l'eau, qui oxydent les câbles métalliques de l'armature de sommet et notamment les câbles des nappes de travail lorsque les câbles de l'armature de protection sont trop dégradés. En outre, ces perforations permettent l'entrée de corps solides, par exemple de pierres qui, sous l'effet du roulage du pneumatique, progressent radialement vers l'intérieur de l'armature de sommet jusqu'à atteindre les nappes de protection. Le frottement continu de ces corps solides contre les câbles métalliques des nappes de protection entraine leur dégradation par usinage laissant alors sans protection les nappes de travail qui sont à leur tour agressées et dégradées par les agents corrosifs.

Que ce soit par dégradation des nappes de protection ou des nappes de travail, le pneumatique devient souvent inutilisable alors que la bande de roulement présente une épaisseur restante importante. La non-utilisation de cette épaisseur restante entraine une perte financière pour l'utilisateur du pneumatique.

De tels pneumatiques sont notamment décrits dans les documents WO2013/174896, WO02/090135 et JPH09143890.

L'invention a donc pour but un pneumatique permettant de maximiser l'utilisation de la bande de roulement.

A cet effet, l'invention a pour objet un pneumatique comprenant une bande de roulement et une armature de sommet agencée radialement à l'intérieur de la bande de roulement, l'armature de sommet comprenant :
- une armature de protection comprenant au moins une nappe de protection présentant une force à rupture supérieure ou égale à 1300 daN.cm⁻¹, la nappe de protection comprenant des éléments de renfort, dit de protection, chaque élément de renfort de protection présentant une force à rupture supérieure ou égale à 3000 N ;
- une armature de travail, agencée radialement à l'intérieur de l'armature de protection, comprenant au moins une nappe de travail comprenant des éléments de renfort, dit de travail, chaque élément de renfort de travail comprenant un câble de travail comprenant au moins un toron comprenant au moins une couche interne de fils et une couche externe de fils enroulés en hélice autour de la couche interne, la couche externe de fils étant insaturée.

La nappe de protection du pneumatique selon l'invention présente une résistance aux agressions particulièrement élevée. En effet, la combinaison d'une force à rupture de la nappe élevée et d'une force à rupture de chaque câble élevée permet de garantir une endurance maximale de la nappe de protection. Contrairement à une nappe de faible force à rupture pour laquelle une contrainte locale trop élevée ne pourrait pas être absorbée par la nappe de protection, la nappe de protection du pneumatique selon l'invention présente une force à rupture suffisante pour reprendre sans risque de rupture la plupart des efforts imposés par un revêtement accidenté. Contrairement à une nappe comprenant des câbles de faible force à rupture individuelle pour lesquels une contrainte locale trop élevée conduirait à une rupture d'un ou plusieurs câble, puis de proche en proche, à une rupture des autres câbles, les câbles de la nappe de protection du pneumatique selon l'invention présentent également une force à rupture individuelle suffisante pour absorber les efforts imposés par un revêtement accidenté.

L'insaturation de la couche externe des torons des câbles de la nappe de travail permet d'obtenir des câbles hautement pénétrables par la gomme. Ainsi, lors de la fabrication du pneumatique, on fait pénétrer autant que possible la gomme dans tous les espaces entre les fils de la couche externe. En effet, si cette pénétration est insuffisante, il se forme alors de trop nombreux canaux ou capillaires vides le long du câble, et les agents corrosifs susceptibles de pénétrer dans le pneumatique suite aux agressions, cheminent le long de ces canaux et réduisent la durée de vie du câble et donc celle des nappes de travail.

En plus de ces effets propres à chacune des nappes de protection et de travail qui permettent d'allonger leur durée de vie respectives, la combinaison des caractéristiques de ces nappes permet d'utiliser quasi-intégralement la bande de roulement grâce à un effet synergique dont l'importance a surpris les inventeurs à l'origine de l'invention. Cet effet synergique est démontré dans les tests comparatifs décrits ci-dessous.

L'utilisation totale de la bande de roulement permet donc de limiter, voire de supprimer, la perte financière liée à la non-utilisation d'une partie de la bande de roulement en raison d'une dégradation prématurée de l'armature de sommet.

Concernant les éléments de renforts, les mesures de force à la rupture notée Fr (charge maximale en N) sont effectuées en traction selon la norme ISO 6892-1 d'octobre 2009 sur des éléments de renforts extraits de pneumatiques, de préférence sensiblement neufs, comprenant de la gomme du pneumatique. Concernant les nappes d'éléments de renfort, la force à rupture de la nappe, notée Fm, est obtenue en divisant la force à rupture Fr par le pas de pose. On rappelle que le pas de pose est la distance d'axe à axe entre deux éléments de renfort adjacents.

Par définition, une couche insaturée de fils est telle qu'il existe suffisamment de place dans cette couche pour y ajouter au moins un (X+1)ième fil du même diamètre que les X fils de la couche, plusieurs fils pouvant alors être au contact les uns des autres. Réciproquement, cette couche est dite saturée s'il n'existait pas suffisamment de place dans cette couche pour y ajouter au moins un (X+1)ième fil du même diamètre que les N fils de la couche.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

De préférence, chaque élément de renfort de protection et/ou de travail est un élément filaire. Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé.

Préférentiellement, les éléments de renfort de protection et/ou de travail sont métalliques. Par métallique, on entend par définition un élément de renfort constitué, en masse, majoritairement (c'est-à-dire pour plus de 50% de ces fils) ou intégralement (pour 100% des fils) d'un matériau métallique, par exemple de l'acier.

Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile "), à haute résistance (dit "HT" pour " High Tensile ") ou à très haute résistance (dit SHT pour « Super High Tensile) dont la résistance en traction (Rm) est de préférence supérieure à 2500 MPa, plus préférentiellement supérieure à 3000 MPa et encore plus préférentiellement 3500 MPa (mesure effectuée en traction selon la norme ISO 6892-1 de 2009.

De préférence, le pneumatique comprend une armature de carcasse agencée radialement à l'intérieur de l'armature de sommet et ancrée dans deux bourrelets, un flanc reliant chaque bourrelet à la bande de roulement.

Dans un mode de réalisation préféré, l'armature de protection est intercalée radialement entre la bande de roulement et l'armature de travail.

Avantageusement, le pneumatique comprend un sommet surmonté de la bande de roulement, deux flancs, deux bourrelets, chaque flanc reliant chaque bourrelet au sommet, une armature de carcasse ancrée dans chacun des bourrelets et s'étendant dans les flancs jusque dans le sommet.

Dans un mode de réalisation préféré, l'armature de carcasse est agencée radialement à l'intérieur de l'armature de sommet.

Avantageusement, l'armature de carcasse comprend au moins une nappe de carcasse comprenant des éléments de renfort, dit de carcasse, les éléments de renfort de carcasse faisant un angle supérieur ou égal à 65°, de préférence à 80° et plus préférentiellement allant de 80° à 90° par rapport à la direction circonférentielle du pneumatique.

Dans un mode de réalisation préféré, le pneumatique présente une dimension de type W R U dans laquelle U≥35, de préférence U≥49 et plus préférentiellement U≥57.

### ARMATURE DE PROTECTION

Avantageusement, l'armature de protection comprend deux nappes de protection, chaque nappe de protection présentant une force à rupture supérieure ou égale à 1300 daN.cm⁻¹, chaque élément de renfort de protection de chaque nappe de protection présentant une force à rupture supérieure ou égale à 3000 N. Ainsi, on améliore davantage la protection des nappes de travail et l'endurance du pneumatique en général.

Avantageusement, la force à rupture de chaque nappe de protection est supérieure ou égale à 1400 daN.cm⁻¹, de préférence à 1500 daN.cm⁻¹ et plus préférentiellement à 1600 daN.cm⁻¹.

Avantageusement, la force à rupture de chaque élément de renfort de protection est supérieure ou égale à 3500 N, de préférence à 4500 N et plus préférentiellement à 5500 N.

La combinaison d'une force à rupture de nappe et d'une force à rupture individuelle des éléments de renfort relativement élevées permet de s'assurer que l'on dispose d'une armature de protection avec suffisamment de câbles pour reprendre les efforts et que ces câbles sont unitairement suffisamment résistant. Ainsi, on évite l'utilisation de câbles résistants mais trop écartés et de nappes denses mais trop peu résistantes.

Avantageusement, le pas de pose des éléments de renfort de protection va de 1,2 à 6,5 mm, de préférence de 2,5 à 5,0 mm, et plus préférentiellement de 3,5 à 4,5 mm. Un pas de pose trop grand conduirait à la reprise des efforts par un nombre limité d'éléments de renfort et à un risque de rupture de ces éléments de renfort de proche en proche. Un pas de pose trop petit conduirait à un pneumatique lourd, augmenter le coût de revient industriel du pneumatique et pas nécessairement à le rendre plus endurant.

De façon optionnelle, les éléments de renfort de la ou des nappes de protection font un angle au moins égal à 10°, de préférence allant de 10° à 35° et plus préférentiellement de 15° à 35° avec la direction circonférentielle du pneumatique.

De préférence, chaque élément de renfort de protection comprend un câble de protection comprenant au moins un toron comprenant au moins une couche interne de fils et une couche externe de fils enroulés en hélice autour de la couche interne, la couche externe étant insaturée. La désaturation de la couche externe du ou des torons du câble de protection permet d'obtenir des câbles hautement pénétrables par la gomme. Grâce à la pénétration de la gomme, on évite la formation de trop nombreux canaux ou capillaires vides le long du câble, et le risque de pénétration d'agents corrosifs dans le pneumatique suite aux agressions, leur cheminement le long de ces canaux et la réduction de la durée de vie du câble et donc de celle des nappes de protection.

En plus de rendre le câble élastique, cet écartement des fils et des torons par rapport respectivement à l'axe du toron et du câble permet de favoriser le passage de la gomme entre les fils de chaque toron et entre les différents torons. La résistance à la corrosion est ainsi améliorée.

Dans un autre mode de réalisation, chaque élément de renfort de protection comprend un câble, dit de protection, de structure (K+L) x (M+P) comprenant :
- une couche interne du câble constituée de K toron(s) interne(s),
- une couche externe du câble constituée de L torons externes enroulés en hélice autour de la couche interne du câble,
chaque toron interne et externe comprenant :
- une couche interne du toron constituée de M fil(s) interne(s), et
- une couche externe du toron constituée de N fils externes enroulés en hélice autour de la couche interne du toron.

Dans cet autre mode de réalisation, on a préférentiellement K>1 et/ou M>1.

Ainsi, de préférence, de par sa structure (K+L) x (M+P) avec K>1 et M>1, le câble est du type « HE » c'est-à-dire à haute élasticité. Les câbles se déforment donc facilement quel que soit le revêtement, notamment sur terrain accidenté.

Dans ce mode de réalisation, la couche externe du câble est insaturée.

Par définition, une couche insaturée de torons est telle qu'il existe suffisamment de place dans cette couche pour y ajouter au moins un (L+1)ième toron du même diamètre que les L torons de la couche, plusieurs torons pouvant alors être au contact les uns des autres. Réciproquement, cette couche est dite saturée s'il n'existait pas suffisamment de place dans cette couche pour y ajouter au moins un (L+1)ième toron du même diamètre que les L torons de la couche.

Ainsi, le câble présente une résistance élevée à la corrosion. En effet, l'insaturation de la couche externe du câble permet de créer au moins une ouverture de passage de la gomme entre deux torons externes afin de faire efficacement pénétrer la gomme lors de la vulcanisation du pneumatique.

Dans un autre mode de réalisation, chaque élément de renfort de protection comprend un câble, dit de protection, de structure K x (M+P) comprenant une unique couche constituée de K torons, chaque toron comprenant :
- une couche interne du toron constituée de M fil(s) interne(s), et
- une couche externe du toron constituée de N fils externes enroulés en hélice autour de la couche interne du toron.

### ARMATURE DE TRAVAIL

Avantageusement, l'armature de travail comprend deux nappes de travail, chaque nappe de travail comprenant des éléments de renfort de travail, chaque élément de renfort de travail de chaque nappe de travail comprenant un câble de travail comprenant au moins un toron comprenant au moins une couche interne de fils et une couche externe de fils enroulés en hélice autour de la couche interne, la couche externe étant insaturée.

Avantageusement, la distance interfils des fils de la couche externe est supérieure ou égale à 25 µm, voire 30 µm, de préférence à 40 µm et plus préférentiellement à 50 µm. La distance interfils d'une couche est définie, sur une section du câble perpendiculaire à l'axe principal du câble, comme la plus petite distance séparant, en moyenne sur ladite couche, deux fils adjacents de ladite couche. Ainsi, des canaux permettent le passage de la gomme, d'une part au travers de la couche externe et d'autre part, au travers de la couche intermédiaire afin de faire efficacement pénétrer la gomme dans le câble lors de la vulcanisation du pneumatique.

De préférence, chaque câble de travail comprend au moins une couche interne du câble comprenant au moins un toron interne et une couche externe du câble comprenant plusieurs torons externes. Chaque toron externe comprend au moins une couche interne de fils et une couche externe de fils enroulés en hélice autour de la couche interne de fils, la couche externe de fils étant insaturée. Ainsi, on permet la pénétration de la gomme au travers des torons externes des câbles de l'armature de travail.

Avantageusement, la force à rupture de chaque nappe de travail est supérieure ou égale à 2000 daN.cm⁻¹, de préférence à 3500 daN.cm⁻¹ et plus préférentiellement à 4000 daN.cm⁻¹.

Avantageusement, la force à rupture de chaque élément de renfort de travail est supérieure ou égale à 15000 N, de préférence à 20000 N et plus préférentiellement à 25000 N.

Avantageusement, le pas de pose de chaque élément de renfort de travail va de 3,5 à 7,5 mm, de préférence de 4,0 à 7,0 mm et plus préférentiellement de 4,5 à 6,5 mm.

De façon optionnelle, les éléments de renfort de travail sont croisés d'une nappe de travail à l'autre et font un angle au plus égal à 60°, de préférence allant de 15° à 40° avec la direction circonférentielle du pneumatique.

De préférence, l'élément de renfort comprenant une couche interne du câble constituée de J toron(s) interne(s) et une couche externe du câble et constituée de Q torons externes, le toron comprenant une couche externe de fils insaturée est un des Q torons externes. Plus préférentiellement, chacun des Q torons externes comprend une couche externe de fils insaturée. Encore plus préférentiellement, chacun des Q torons externes et chacun des J toron(s) interne(s) comprend une couche externe de fils insaturée.

Dans mode de réalisation, chaque câble de travail est de structure (J+Q) x (A +B) et comprend :
- une couche interne du câble constituée de J toron(s) interne(s),
- une couche externe du câble constituée de Q torons externes enroulés en hélice autour de la couche interne du câble,
chaque toron interne et externe comprenant :
- une couche interne du toron constituée de A fil(s) interne(s),
- une couche externe du toron constituée de B fils externes enroulés en hélice autour de la couche interne du toron.

Dans un autre mode de réalisation, chaque câble de travail est de structure (J+Q) x (A +C+B) et comprend :
- une couche interne du câble constituée de J toron(s) interne(s),
- une couche externe du câble constituée de Q torons externes enroulés en hélice autour de la couche interne du câble,
chaque toron interne et externe comprenant :
- une couche interne du toron constituée de A fil(s) interne(s),
- une couche intermédiaire du toron constituée de C fils intermédiaires enroulés en hélice autour de la couche interne du toron,
- une couche externe du toron constituée de B fils externes enroulés en hélice autour de la couche intermédiaire du toron.

### ARMATURE DE FRETTAGE

Dans un mode de réalisation, l'armature de sommet comprend une armature de frettage comprenant au moins une nappe de frettage. De préférence, l'armature de frettage comprend deux nappes de frettage.

Avantageusement, chaque nappe de frettage comprend des éléments de renfort, dit de frettage, les éléments de renfort de frettage font un angle au plus égal à 10°, de préférence allant de 5° à 10° avec la direction circonférentielle du pneumatique.

Dans un mode de réalisation préféré, l'armature de frettage est agencée radialement à l'intérieur de l'armature de travail.

Dans un autre mode de réalisation, l'armature de frettage est agencée entre l'armature de travail et l'armature de protection.

Dans un mode de réalisation préféré de l'invention, chaque nappe de frettage présente une force à rupture Fm_{NSF} supérieure ou égale à 1300 daN.cm⁻¹, de préférence à 1500 daN.cm⁻¹, plus préférentiellement à 1800 daN.cm⁻¹ et encore plus préférentiellement à 2000 daN.cm⁻¹.

Dans un mode de réalisation, chaque élément de renfort de frettage présente une force à rupture supérieure ou égale à 2500 N, de préférence à 4000 N, plus préférentiellement à 6000 N et encore plus préférentiellement à 8500 N.

Dans un autre mode de réalisation, le pas de pose des éléments de renfort de frettage va de 1,8 à 6,5 mm, de préférence de 3,0 à 5,5 mm, et plus préférentiellement de 3,7 à 4,8 mm.

L'invention sera mieux comprise à la lecture de la description qui va suivre, donnée uniquement à titre d'exemple non limitatif et faite en se référant aux dessins dans lesquels :
- la figure 1 est une vue en coupe simplifiée d'un pneumatique selon un premier mode de réalisation de l'invention ;
- la figure 2 est une vue de détails de la partie I du pneumatique de la figure 1 ;
- la figure 3 est une vue en coupe perpendiculaire à l'axe de l'élément de renfort de protection (supposé rectiligne et au repos) d'un élément de renfort d'une nappe de protection du pneumatique de la figure 1 ;
- la figure 4 est une vue analogue à celle de la figure 3 d'un élément de renfort d'une nappe de protection du pneumatique de la figure 1 ; et
- la figure 5 est une vue analogue à celle de la figure 3 d'un élément de renfort d'une nappe de travail du pneumatique de la figure 1.

### EXEMPLES DE PNEUMATIQUES SELON L'INVENTION

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point, d'une nappe ou d'une armature P1 qu'il est « radialement intérieur » à un point, d'une nappe ou d'une armature P2 (ou « radialement à l'intérieur » du point P2) s'il est plus près de l'axe de rotation du pneumatique que le point, la nappe ou l'armature P2. Inversement, un point, une nappe ou une armature P3 est dit « radialement extérieur à » un point, une nappe ou une armature P4 (ou « radialement à l'extérieur » du point, d'une nappe ou d'une armature P4) s'il est plus éloigné de l'axe de rotation du pneumatique que le point, la nappe ou l'armature P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point, une nappe ou une armature P5 est dit « axialement intérieur » à un point, une nappe ou une armature P6 (ou «axialement à l'intérieur » du point, de la nappe ou de l'armature P6) s'il est plus près du plan médian M du pneumatique que le point, la nappe ou l'armature P6. Inversement, un point, une nappe ou une armature P7 est dit « axialement extérieur à » un point P8 (ou « axialement à l'extérieur » du point, de la nappe ou de l'armature P8) s'il est plus éloigné du plan médian M du pneumatique que le point, la nappe ou l'armature P8.Le « plan médian » M du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

Sur les figures, on a représenté un repère X, Y, Z correspondant respectivement aux orientations habituelles axiale, radiale et circonférentielle d'un pneumatique.

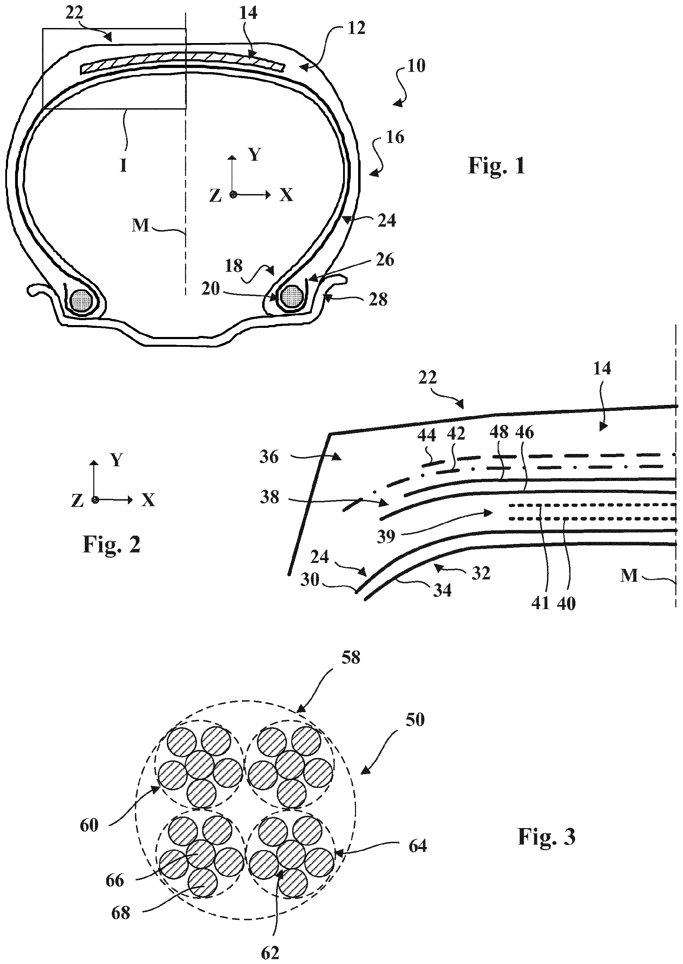

On a représenté sur les figures 1 et 2 un pneumatique pour véhicule de type génie civil, par exemple de type « dumper », et désigné par la référence générale 10. Ainsi, le pneumatique 10 présente une dimension de type W R U, par exemple 40.00 R 57 ou encore 59/80 R 63.

De façon connue pour l'homme du métier, W, désigne :
- lorsqu'il est sous la forme H/B, le rapport nominal d'aspect H/B tel que défini par l'ETRTO (H étant la hauteur de la section du pneumatique et B étant la largeur de la section du pneumatique)
- lorsqu'il est sous la forme H.00 ou B.00, dans lequel H=B, H et B étant tel que défini ci-dessus.
U représente le diamètre, en pouces, du siège de la jante sur laquelle le pneumatique est destiné à être monté, R désigne le type d'armature de carcasse du pneumatique, ici radiale. On a U≥35, de préférence U≥49 et plus préférentiellement U≥57.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement 22. L'armature de sommet 14 est agencée radialement à l'intérieur de la bande de roulement 22. Une armature de carcasse 24, agencée radialement à l'intérieur de l'armature de sommet 14, est ancrée dans chaque bourrelet 18, ici enroulée autour de chaque tringle 20 et comprend un retournement 26 disposé vers l'extérieur du pneumatique 10 qui est ici représenté monté sur une jante 28.

L'armature de carcasse 24 comprend au moins une nappe de carcasse 30 comprenant des éléments de renfort, dit de carcasse (non représentés). Les éléments de renfort de carcasse font un angle supérieur ou égal à 65°, de préférence à 80° et plus préférentiellement allant de 80° à 90° par rapport à la direction circonférentielle du pneumatique. Les éléments de renfort de carcasse sont agencés sensiblement parallèlement les uns aux autres et s'étendent d'un bourrelet 18 à l'autre. Des exemples de tels éléments de renfort de carcasse sont décrits dans les documents EP0602733 ou bien encore EP0383716.

Le pneumatique 10 comprend également une nappe d'étanchéité 32 constituée d'un élastomère (communément appelée "gomme intérieure") qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature de frettage 39 agencée radialement à l'intérieur de l'armature de travail 38. Ainsi, l'armature de protection 36 est intercalée radialement entre la bande de roulement 22 et l'armature de travail 38.

L'armature de protection 36 comprend des première et deuxième nappes de protection 42, 44, la première nappe de protection 42 étant agencée radialement à l'intérieur de la deuxième nappe de protection 44.

L'armature de travail 38 comprend des première et deuxième nappes de travail 46, 48, la première nappe de travail 46 étant agencée radialement à l'intérieur de la deuxième nappe de travail 48.

L'armature de frettage 39, également appelée bloc limiteur, dont la fonction est de reprendre en partie les sollicitations mécaniques de gonflage, comprend des première et deuxième nappes de frettage 40, 41, la première nappe de frettage 40 étant agencée radialement à l'intérieur de la deuxième nappe de frettage 41.

On a représenté sur les figures 3, 4 et 5 respectivement un premier élément de renfort de protection 50 de la première nappe protection 42, un deuxième élément de renfort de protection 52 de la deuxième nappe de protection 44 et un élément de renfort de travail 54, 56 des première et deuxièmes nappes de travail 46, 48. En variante, les éléments de renfort travail 54, 56 des première et deuxième nappes de travail 46, 48 peuvent être différents.

Chacun de ces éléments 50, 52, 54, 56 comprend un câble métallique.

Par câble métallique, on entend par définition un câble formé de fils constitués majoritairement (c'est-à-dire pour plus de 50% de ces fils) ou intégralement (pour 100% des fils) d'un matériau métallique. L'invention est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est utilisé, sa teneur en carbone (% en poids d'acier) est de préférence comprise entre 0,7% et 0,9%. Ces teneurs représentent un bon compromis entre les propriétés mécaniques requises pour le pneumatique et la faisabilité des fils. Le métal ou l'acier utilisé est revêtu d'une couche métallique, ici d'une couche de laiton (alliage Zn-Cu) ou de zinc.

### ARMATURE DE PROTECTION

En référence à la figure 3, chaque premier élément de renfort de protection 50 de la première nappe de protection 42 comprend un câble métallique 58, dit de protection, de structure K' x (M'+P').

Chaque câble métallique 58 de protection comprend K' torons 60 enroulés en hélice à un pas p. Chaque toron 60 comprend une couche interne 62 du toron et une couche externe 64 du toron. La couche interne 62 est constituée de M' fil(s) interne(s) 66 enroulé(s) en hélice à un pas p1. La couche externe 64 est constituée de P' fils externes 68 enroulés en hélice autour de la couche interne 62 au pas p2.

Les P' fils externes 68 sont enroulés dans le même sens que les K' torons 60. En variante, ils sont enroulés dans des sens différents.

La couche externe 64 est insaturée.

Dans l'exemple de la figure 3, K'=4, M'=1 et P'=5.

Le pas p est supérieur ou égal à 3 mm et inférieur ou égal à 15 mm, de préférence supérieur ou égal à 5 mm et inférieur ou égal à 10 mm. Ici, p=8 mm. Le pas p1 est ici infini. Le pas p2 est supérieur ou égal à 3 mm et inférieur ou égal à 10. Ici, p2=5 mm.

Le diamètre D1, D2 respectivement de(s) fil(s) interne(s) 66 et externes 68 est supérieur ou égal à 0,10 mm et inférieur ou égal à 0,50 mm, de préférence supérieur ou égal à 0,15 mm et inférieur ou égal à 0,35 mm, en l'espèce égal à 0,26 mm.

Ainsi, conformément à la nomenclature habituelle, le câble 58 est appelé câble « 24.26 ».

La force à rupture Fr_{NSP1} de chaque premier élément de renfort de protection 50 est égale à 2550 N. Le pas de pose des premiers éléments de renfort de protection 50 est égal à 2,5 mm. La force à rupture de Fm_{NSP1} de la première nappe de protection 42 est égale à 1020 daN.cm⁻¹.

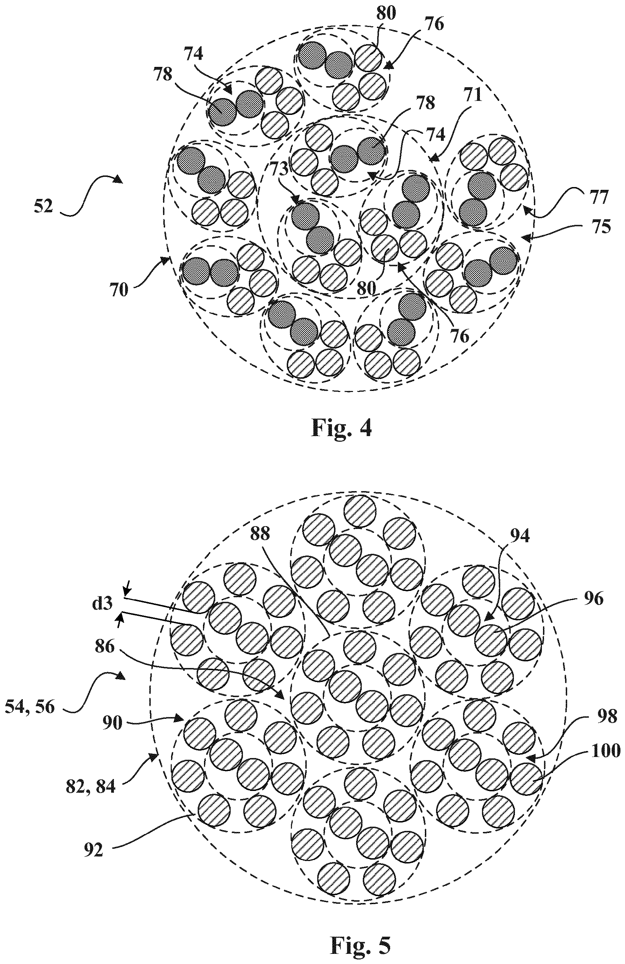

En référence à la figure 4, chaque deuxième élément de renfort de protection 52 de la deuxième nappe de protection 44 comprend un câble métallique 70, dit de protection, de structure (K+L) x (M+P). Ainsi, dans ce mode de réalisation, chaque câble métallique 70 comprend une couche interne 71 du câble constituée de K torons internes 73 et une couche externe 75 du câble et constituée de L>1 torons externes 77 enroulés en hélice autour de la couche interne 71. De préférence, K>1.

La couche externe 75 du câble est insaturée.

Chaque toron interne 73 et externe 77 comprend une couche interne 74 constituée de M fils internes 78 et une couche externe 76 constituée de P fils externes 80. La couche externe 76 de chaque toron interne 73 et externe 77 est insaturée.

Pour le câble 70 de la figure 4, on a K=3, L=8, M=2 et P=3.

Les M fils internes 78 de chacun des K torons internes 73 sont enroulés en hélice selon un pas p1i avec ici p1i=7,5 mm. Les P fils externes 80 de chacun des K torons internes 73 sont enroulés en hélice selon un pas p2i avec ici p2i=5 mm.

Les M fils internes 78 de chacun des L torons externes 77 sont enroulés en hélice selon un pas p1e avec ici p1e=15 mm. Les P fils externes 80 de chacun des L torons externes 77 sont enroulés selon un pas p2e avec ici p2e=7,5 mm.

Les torons internes 73 sont enroulés en hélice selon un pas pi avec ici pi=7,5 mm. Les torons externes 77 sont enroulés en hélice autour de la couche interne 71 selon un pas pe avec ici pe=15 mm.

Les M fils internes 78 sont enroulés dans le même sens que les P fils externes 80 et dans le même sens que les K torons 73. En variante, les M fils internes 78 sont enroulés dans le même sens que les P fils externes 80 et dans le sens inverse au sens d'enroulement des K torons 73.

Les K torons internes 73 et les L torons externes 77 sont enroulés dans le même sens de torsion.

Le diamètre D1, D2 respectivement de(s) fil(s) interne(s) 78 et externes 80 est supérieur ou égal à 0,10 mm et inférieur ou égal à 0,50 mm, de préférence supérieur ou égal à 0,15 mm et inférieur ou égal à 0,35 mm, en l'espèce égal à 0,26 mm.

Ainsi, conformément à la nomenclature habituelle, les câbles 70 sont appelés câbles « 55.26 ».

La force à rupture Fr_{NSP2} de chaque deuxième élément de renfort de protection 52 est supérieure ou égale à 3000N, voire 3500 N, de préférence à 4500 N et plus préférentiellement à 5500 N. En l'espèce, Fr_{NSP2}=6325 N.

Le pas de pose des deuxièmes éléments de renfort de protection 52 va de 1,2 à 6,5 mm, de préférence de 2,5 à 5,0 mm, et plus préférentiellement de 3,5 à 4,5 mm et ici est égal à 3,7 mm

La force à rupture de Fm_{NSP2} de la deuxième nappe de protection 44 est supérieure ou égale à 1300 daN.cm⁻¹, voire à 1400 daN.cm⁻¹, de préférence à 1500 daN.cm⁻¹ et plus préférentiellement à 1600 daN.cm⁻¹. Ici Fm_{NSP2} = 1709 daN.cm⁻¹.

Les premiers 50 et deuxièmes 52 éléments de renfort de protection font, respectivement au sein de chaque première 42 et deuxième 44 nappe de protection au moins égal à 10°, de préférence allant de 10° à 35° et plus préférentiellement de 15° à 35° avec la direction circonférentielle Z du pneumatique 10 et ici égal à 24°. Les éléments de renfort de protection 50, 52 sont sensiblement parallèles entre eux au sein de chaque nappe de protection 42, 44 et croisés d'une nappe de protection 42, 44 à l'autre.

### ARMATURE DE TRAVAIL

En référence à la figure 5, chaque élément de renfort de travail 54, 56 des première et deuxièmes nappes de travail 46, 48 comprend respectivement un câble métallique 82, 84, dit de travail, de structure (J+Q) x (A+B).

Chaque câble 82, 84 comprend une couche interne 86 du câble constituée de J toron(s) interne(s) 88 et une couche externe 90 du câble et constituée de Q torons externes 92 enroulés en hélice autour de la couche interne 86. Dans le cas où J>1, les J torons internes sont enroulés en hélice au pas pi'. Les Q torons externes sont enroulés au pas pe'.

Chaque toron interne 88 et externe 92 comprend une couche interne 94 constituée de A fil(s) interne(s) 96 et une couche externe 98 constituée de B fils externes 100 enroulés en hélice autour de la couche interne 94. Dans le cas où A>1, les A fils internes 96 sont enroulés en hélice.

Dans l'exemple de la figure 5, J=1, Q=6, A=2, B=7.

Les A fils internes 96 de chacun des J torons internes 88 sont enroulés en hélice selon un pas p1i' avec ici p1i'=7,5 mm. Les B fils externes 100 de chacun des Q torons internes 88 sont enroulés en hélice selon un pas p2i' avec ici p2i'=5 mm.

Les A fils internes 96 de chacun des Q torons externes 92 sont enroulés en hélice selon un pas p1e' avec ici p1e'=15 mm. Les B fils externes 100 de chacun des Q torons externes 92 sont enroulés selon un pas p2e' avec ici p2e'=7,5 mm.

Les torons internes 88 sont enroulés en hélice selon un pas pi' avec ici pi'=7,5 mm. Les torons externes 92 sont enroulés en hélice autour de la couche interne 86 selon un pas pe' avec ici pe'=15 mm.

Chaque diamètre D1, D2 des fils internes 96 et externes 100 est supérieur ou égal à 0,15 mm et inférieur ou égal à 0,45 mm, de préférence supérieur ou égal à 0,20 mm et inférieur ou égal à 0,40 mm, plus préférentiellement supérieur ou égal à 0,22 mm et inférieur ou égal à 0,38 mm, en l'espèce égal à 0,35 mm.

Ainsi, conformément à la nomenclature habituelle, chaque câble 82, 84 est appelé câble « 63.35 ».

La couche externe 98 de B fils externes 100 est insaturée. La distance interfils d3 entre les fils externes 100 de la couche externe 98 est supérieure ou égale à 25 µm, voire à 30 µm, de préférence à 40 µm et plus préférentiellement à 50 µm. En l'espèce, d3=75 µm Les A fils internes 96 et les B fils externes 100 sont enroulés dans des sens d'enroulement différents. En variante, ils sont enroulés dans des sens d'enroulement identiques.

La force à rupture Fr_{NST1}, Fr_{NST2} de chaque élément de renfort de travail 54, 56 est supérieure ou égale à 15000 N. En l'espèce, Fr_{NST1} = Fr_{NST2} = 17400 N. Dans d'autres modes de réalisation, la force à rupture Fr_{NST1}, Fr_{NST2} de chaque élément de renfort de travail 54, 56 est supérieure ou égale à 20000 N et plus préférentiellement à 25000 N.

Le pas de pose de chaque premier et deuxième élément de renfort de travail 54, 56 va de 3,5 à 7,5 mm, de préférence de 4,0 à 7,0 mm et plus préférentiellement de 4,5 à 6,5 mm et ici est égal à 5,5 mm.

La force à rupture de Fm_{NST1}, Fm_{NST2} de chaque première et deuxième nappe de travail 46, 48 est supérieure ou égale à 2000 daN.cm⁻¹. Ici Fm_{NST1} = Fm_{NST2} = 3164 daN.cm⁻¹. Dans d'autres modes de réalisation, la force à rupture de Fm_{NST1}, Fm_{NST2} de chaque première et deuxième nappe de travail 46, 48 est supérieure ou égale à 3500 daN.cm⁻¹ et plus préférentiellement à 4000 daN.cm⁻¹.

Les premiers 54 et deuxièmes 56 éléments de renfort de travail font, respectivement au sein de chaque première 46 et deuxième 48 nappe de travail, un angle au plus égal à 60°, de préférence allant de 15° à 40° avec la direction circonférentielle Z du pneumatique 10 et ici égal à 19° pour la première nappe 46 et à 33° pour la deuxième nappe 48. Les éléments de renfort de travail 54, 56 sont sensiblement parallèles entre eux au sein de chaque nappe de travail 46, 48 et croisés d'une nappe de travail 46, 48 à l'autre.

### ARMATURE DE FRETTAGE

Chaque nappe de frettage 40, 41 comprend des éléments de renfort métalliques de frettage (non représentés), par exemple des câbles métalliques identiques aux éléments de renfort de protection, et faisant un angle au plus égal à 10°, de préférence allant de 5° à 10° avec la direction circonférentielle Z du pneumatique 10. Ici l'angle est égal à 8°. Les éléments de renfort de frettage sont croisés d'une nappe de frettage 40, 41 à l'autre. Ainsi, dans le mode de réalisation illustré, à l'exception de l'angle que font les éléments de renfort de chaque nappe, les nappes de frettage et de protection sont identiques.

De façon préférée, qu'il soit identique ou non aux éléments de renfort de protection, chaque élément de renfort de frettage est constitué d'un câble métallique présentant une structure K' x (M'+P'), comprenant une unique couche constituée de K' torons, chaque toron comprenant :
- une couche interne du toron constituée de M' fil(s) interne(s), et
- une couche externe du toron constituée de N' fils externes enroulés en hélice autour de la couche interne du toron.

Chaque fil unitaire métallique présente un diamètre allant de 0,10 mm à 0,35 mm.

Chaque élément de renfort de frettage présente une force à rupture Fr supérieure ou égale à 2500 N, de préférence à 4000 N, plus préférentiellement à 6000 N et plus préférentiellement supérieure ou égale à 8500 N.

Le pas de pose des éléments de renfort de frettage de chaque nappe de frettage 42, 44 va de 1,8 à 6,5 mm, de préférence de 3,0 à 5,5 mm, et plus préférentiellement de 3,7 à 4,8 mm.

Chaque nappe de frettage 40, 41 présente respectivement une force à rupture Fm_{NSF1}, Fm_{NSF2} supérieure ou égale à 1300 daN.cm⁻¹, de préférence à 1500 daN.cm⁻¹, plus préférentiellement à 1800 daN.cm⁻¹ et encore plus préférentiellement à 2000 daN.cm⁻¹.

En variante, on pourra utiliser des éléments de renfort de frettage différents de ceux de l'armature de protection.

On pourra également envisager un deuxième mode de réalisation de l'invention tel que décrit ci-dessous.

A la différence du pneumatique selon le premier mode de réalisation, les caractéristiques mécaniques des première et deuxième nappes de protection 42, 44 sont sensiblement identiques. En effet, à la différence du pneumatique selon le premier mode de réalisation, chaque première et deuxième nappe de protection 42, 44 comprend respectivement des premiers et deuxièmes éléments de renfort de protection 50, 52 comprenant des câbles métallique de protection 58, 70 identiques et, conformément à la nomenclature habituelle, appelés câbles « 55.26 ».

La force à rupture Fr_{NSP1} de chaque câble métallique 58 de protection est supérieure ou égale à 3000N, voire 3500 N, de préférence à 4500 N et plus préférentiellement à 5500 N. En l'espèce, Fr_{NSP1} = Fr_{NSP2} = 6050 N.

Le pas de pose des premiers éléments de renfort de protection 50 va de 1,2 à 6,5 mm, de préférence de 2,5 à 5,0 mm, et plus préférentiellement de 3,5 à 4,5 mm.

La force à rupture Fm_{NSP1} de la première nappe de protection 42 est supérieure ou égale à 1300 daN.cm⁻¹, voire à 1400 daN.cm⁻¹, de préférence à 1500 daN.cm⁻¹ et plus préférentiellement à 1600 daN.cm-1. En l'espèce, Fm_{NSP1} = Fm_{NSP2} = 1709 daN.cm⁻¹.

### EXEMPLE DE PROCEDE DE FABRICATION DES CABLES DES PNEUMATIQUES SELON L'INVENTION

On fabrique les câbles métalliques 58, 70, 82, 84 par câblage ou bien par retordage, selon des procédés classiques connus de l'homme du métier.

### TESTS COMPARATIFS

On a comparé ci-dessous un pneumatique de l'état de la technique T0, deux pneumatiques témoins T1 et T2 et le pneumatique 10 selon le premier mode de réalisation.

A la différence du pneumatique 10 selon l'invention, chaque première et deuxième nappe de protection du pneumatique de l'état de la technique T0 comprend des éléments de renfort métalliques comprenant des câbles métalliques « 24.26 » décrits ci-dessus.

En outre, à la différence du pneumatique 10 selon l'invention, chaque première et deuxième nappe de travail du pneumatique T0 comprend des éléments de renfort métalliques comprenant des câbles métalliques appelés « 189.23 » de structure (J+Q) x (A+B+C) avec J=1, Q=6, A=3, B=9 et C=15 et dans lequel tous les fils présentent un diamètre égal à 0,23 mm. La couche externe des C fils de chaque câble « 189.23 » est saturée. En effet, la distance interfils d3 de la couche externe de chaque toron des câbles métalliques « 189.23 » est égale à 6 µm.

A la différence du pneumatique 10 selon l'invention, chaque première et deuxième nappe de protection du pneumatique témoin T1 comprend des éléments de renfort métalliques comprenant des câbles métalliques « 24.26 » tels que décrits-ci-dessus.

A la différence du pneumatique 10 selon l'invention, chaque première et deuxième nappe de travail du pneumatique T2 comprend des éléments de renfort métalliques comprenant des câbles métalliques « 189.23 » tels que décrits ci-dessus.

On a rassemblé les caractéristiques des différents câbles décrits ci-dessous dans le tableau 1 ci-dessous.

**Tableau 1**

| **Câble** | **24.26** | **55.26** | **189.23** | **63.35** |
|---|---|---|---|---|
| **Nappe concernée** | **NSP1** | | **NST1** | |
| **Pas de pose (mm)** | 2,5 | 3,7 | 5,5 | 5,5 |
| **Fm de la nappe (daN.cm⁻¹)** | 1050 | 1709 | 3636 | 3164 |
| **Fr (N.mm²)** | 2550 | 6325 | 20000 | 17400 |
| **Désaturation couche externe** | | | Non | Oui |
| **Distance interfils d3 (µm)** | | | 6 | 75 |

On a fait rouler un nombre significatif de chaque pneumatique T0, T1, T2 et 10, ici entre 10 et 20, sur différents terrain accidentés, par exemple des mines d'extraction. Ainsi, sur un premier terrain, on a comparé un nombre significatifs de pneumatiques de l'état de la technique T0 à un nombre significatif de pneumatiques témoins T1. Sur un deuxième terrain, on a fait la même comparaison entre des pneumatiques T0 et T2. Enfin, sur un troisième terrain, on a fait la même comparaison entre des pneumatiques T0 et 10.

On a alors compté la proportion de pneumatiques devant être retirés suite à une agression de l'armature de sommet ne permettant pas de continuer à faire rouler le pneumatique, et dont l'usure U au retrait du pneumatique est inférieure à 95% au centre de la bande de roulement du pneumatique.

On a également compté la proportion de pneumatiques dont on a pu utiliser quasi-intégralement la bande de roulement, c'est-à-dire dont l'usure U au retrait du pneumatique est supérieure ou égale à 95 %.

Les résultats sont résumés dans le tableau 2 ci-dessous. Par expérience, les observateurs de ces tests considèrent que, pour qu'une différence soit significative, un écart d'au moins 10 points doit être observé.

**Tableau 2**

| | **NST1** | **NST2** | **NSP1** | **NSP2** | **Retrait avec agression de l'armature de sommet et U < 95%** | | **Retrait avec U ≥ 95%** | |
|---|---|---|---|---|---|---|---|---|
| | | | | | **T0** | **Pneumatique testé** | **T0** | **Pneumatique testé** |
| T0 | 189.23 | 189.23 | 24.26 | 24.26 | | | | |
| T1 | 63.35 | 63.35 | 24.26 | 24.26 | 47% | 55% | 17% | 10% |
| T2 | 189.23 | 189.23 | 55.26 | 55.26 | 33% | 37% | 33% | 37% |
| 10 | 63.35 | 63.35 | 24.26 | 55.26 | 21% | 0% | 54% | 100% |

La comparaison entre les pneumatiques T0 et T1 ne montre pas de différence significative dans la proportion de pneumatiques devant être retirés avec une usure inférieure à 95 %, ni dans la proportion de pneumatique atteignant une usure supérieure ou égale à 95%, qui reste relativement faible. Ainsi, le seul changement de l'armature de travail ne permet pas de maximiser l'utilisation de la bande de roulement.

La comparaison entre les pneumatiques T0 et T2 conduit à la même conclusion. Le seul changement de l'armature de protection, ici des deux nappes de protection, ne permet pas non plus de maximiser l'utilisation de la bande de roulement.

La comparaison entre les pneumatiques T0 et 10 montre que la combinaison, d'une part, d'une armature de protection comprenant au moins une nappe présentant une force à rupture particulièrement élevée, ici supérieure ou égale à 1300 daN.cm⁻¹, et comprenant des câbles présentant une force à rupture également élevée, ici supérieure ou égale à 3000 N et, d'autre part, d'une armature de travail comprenant des câbles hautement pénétrables, ici un toron comprenant une couche externe de fils insaturée, permet de maximiser l'utilisation de la bande de roulement. Ainsi, même si indépendamment l'une de l'autre chaque armature de protection et de travail est efficace, la combinaison des deux armatures confère au pneumatique selon l'invention une résistance aux agressions surprenante.

L'homme du métier déduira aisément des résultats ci-dessus que le pneumatique 10 selon le deuxième mode de réalisation dans lequel chaque nappe de protection 42, 44 comprend des câbles 58, 70 « 55.26 » présente des performances supérieures à celle du pneumatique selon le premier mode de réalisation.

On pourra aussi exploiter des pneumatiques comprenant des câbles métalliques à couches comprenant un unique toron.

On pourra aussi envisager des câbles de travail et/ou de protection comprenant un fil de frette, que ce fil de frette soit métallique ou textile.

## Revendications

1. Pneumatique (10), comprenant une bande de roulement (22) et une armature de sommet (14) agencée radialement à l'intérieur de la bande de roulement (22), l'armature de sommet (14) comprenant :
- une armature de protection (36) comprenant au moins une nappe de protection (42, 44) comprenant des éléments de renfort (50, 52), dit de protection, chaque élément de renfort de protection présentant une force à rupture (Fr) supérieure ou égale à 3000 N ;
- une armature de travail (38), agencée radialement à l'intérieur de l'armature de protection (36), comprenant au moins une nappe de travail (46, 48) comprenant des éléments de renfort (54, 56), dit de travail,
**caractérisé en ce que** la nappe de protection (42, 44) présente une force à rupture (Fm) supérieure ou égale à 1300 daN.cm⁻¹ et **en ce que** chaque élément de renfort de travail (54, 56) comprend un câble de travail (82, 84) comprenant au moins un toron (88, 92) comprenant au moins une couche interne (94) de fils (96) et une couche externe (98) de fils (100) enroulés en hélice autour de la couche interne (94), la couche externe (98) de fils (100) étant insaturée.

2. Pneumatique (10) selon la revendication précédente, dans lequel l'armature de protection (36) est intercalée radialement entre la bande de roulement (22) et l'armature de travail (38).

3. Pneumatique (10) selon l'une quelconque des revendications précédentes, dans lequel la force à rupture (Fm) de chaque nappe de protection (42, 44) est supérieure ou égale à 1400 daN.cm⁻¹, de préférence à 1500 daN.cm⁻¹ et plus préférentiellement à 1600 daN.cm⁻¹.

4. Pneumatique (10) selon l'une quelconque des revendications précédentes, dans lequel la force à rupture (Fr) de chaque élément de renfort de protection (50, 52) est supérieure ou égale à 3500 N, de préférence à 4500 N et plus préférentiellement à 5500 N.

5. Pneumatique (10) selon l'une quelconque des revendications précédentes, dans lequel le pas de pose des éléments de renfort de protection va de 1,2 à 6,5 mm, de préférence de 2,5 à 5,0 mm, et plus préférentiellement de 3,5 à 4,5 mm.

6. Pneumatique (10) selon l'une quelconque des revendications précédentes, dans lequel les éléments de renfort de protection (50, 52) font un angle au moins égal à 10°, de préférence allant de 10° à 35° et plus préférentiellement de 15° à 35° avec la direction circonférentielle du pneumatique (10).

7. Pneumatique (10) selon l'une quelconque des revendications précédentes, dans lequel la distance interfils (d3) des fils (100) de la couche externe (98) est supérieure ou égale à 25 µm, voire à 30 µm, de préférence à 40 µm et plus préférentiellement à 50 µm.

8. Pneumatique (10) selon l'une quelconque des revendications précédentes, dans lequel chaque câble de travail (82, 84) comprenant au moins une couche interne du câble comprenant au moins un toron interne (88) et une couche externe du câble comprenant plusieurs torons externes (92), chaque toron externe (92) comprend au moins une couche interne (94) de fils (96) et une couche externe (98) de fils (100) enroulés en hélice autour de la couche interne (94) de fils (96), la couche externe (98) de fils (100) étant insaturée.

9. Pneumatique (10) selon l'une quelconque des revendications précédentes, dans lequel chaque nappe de travail (46, 48) présente une force à rupture (Fm_{NST}) supérieure ou égale à 2000 daN.cm⁻¹, de préférence à 3500 daN.cm⁻¹, plus préférentiellement à 4000 daN.cm⁻¹.

10. Pneumatique (10) selon l'une quelconque des revendications précédentes, dans lequel, chaque nappe de travail (46, 48) comprenant des éléments de renfort (54, 56), dit de travail, chaque élément de renfort de travail (54, 56) présente une force à rupture (Fr) supérieure ou égale à 15000 N, de préférence à 20000 N, plus préférentiellement à 25000 N.

11. Pneumatique (10) selon l'une quelconque des revendications précédentes, dans lequel, chaque nappe de travail (46, 48) comprenant des éléments de renfort (54, 56), dit de travail, le pas de pose des éléments de renfort de travail (54, 56) va de 3,5 à 7,5 mm, de préférence de 4,0 à 7,0 mm, et plus préférentiellement de 4,5 à 6,5 mm.

12. Pneumatique (10) selon l'une quelconque des revendications précédentes, dans lequel les éléments de renforts de travail (54, 56) font un angle au plus égal à 60°, de préférence allant de 15° à 40° avec la direction circonférentielle du pneumatique (10).

13. Pneumatique (10) selon l'une quelconque des revendications précédentes, dans lequel l'armature de sommet (14) comprend une armature de frettage (39) comprenant au moins une nappe de frettage (40, 41).

14. Pneumatique (10) selon la revendication précédente, dans lequel chaque nappe de frettage (40, 41) comprend des éléments de renfort, dit de frettage, les éléments de renfort de frettage font un angle au plus égal à 10°, de préférence allant de 5° à 10° avec la direction circonférentielle du pneumatique (10).

15. Pneumatique (10) selon la revendication 13 ou 14, dans lequel l'armature de frettage (40) est agencée radialement à l'intérieur de l'armature de travail (38).

## Patentansprüche

1. Reifen (10), umfassend einen Laufstreifen (22) und eine Scheitelbewehrung (14), die radial innerhalb des Laufstreifens (22) angeordnet ist, wobei die Scheitelbewehrung (14) umfasst:
- eine Schutzbewehrung (36), die mindestens eine Schutzeinlage (42, 44) umfasst, die Verstärkungselemente (50, 52), Schutzverstärkungselemente genannt, umfasst, wobei jedes Schutzverstärkungselement eine Bruchkraft (Fr) größer oder gleich 3000 N aufweist;
- eine radial innerhalb der Schutzbewehrung (36) angeordnete Arbeitsbewehrung (38), die mindestens eine Arbeitseinlage (46, 48) umfasst, die Verstärkungselemente (54, 56), Arbeitsverstärkungselemente genannt, umfasst,
**dadurch gekennzeichnet, dass** die Schutzeinlage (42, 44) eine Bruchkraft (Fm) größer oder gleich 1300 daN.cm⁻¹ aufweist und dass jedes Arbeitsverstärkungselement (54, 56) ein Arbeitsseil (82, 84) umfasst, das mindestens eine Litze (88, 92) umfasst, die mindestens eine innere Lage (94) Drähte (96) umfasst und eine äußere Lage (98) Drähte (100), die schraubenlinienförmig um die innere Lage (94) gewickelt sind, wobei die äußere Lage (98) Drähte (100) ungesättigt ist.

2. Reifen (10) nach dem vorhergehenden Anspruch, bei dem die Schutzbewehrung (36) radial zwischen dem Laufstreifen (22) und der Arbeitsbewehrung (38) eingelegt ist.

3. Reifen (10) nach einem der vorhergehenden Ansprüche, bei dem die Bruchkraft (Fm) jeder Schutzeinlage (42, 44) größer oder gleich 1400 daN.cm⁻¹, bevorzugt größer oder gleich 1500 daN.cm⁻¹ und noch bevorzugter größer oder gleich 1600 daN.cm⁻¹ ist.

4. Reifen (10) nach einem der vorhergehenden Ansprüche, bei dem die Bruchkraft (Fr) jedes Schutzverstärkungselements (50, 52) größer oder gleich 3500 N, bevorzugt größer oder gleich 4500 N und noch bevorzugter größer oder gleich 5500 N ist.

5. Reifen (10) nach einem der vorhergehenden Ansprüche, bei dem der Einlegeabstand der Schutzverstärkungselemente 1,2 bis 6,5 mm, bevorzugt 2,5 bis 5,0 mm und noch bevorzugter 3,5 bis 4,5 mm beträgt.

6. Reifen (10) nach einem der vorhergehenden Ansprüche, bei dem die Schutzverstärkungselemente (50, 52) einen Winkel von mindestens 10°, bevorzugt von 10° bis 35° und noch bevorzugter von 15° bis 35° mit der Umfangsrichtung des Reifens (10) bilden.

7. Reifen (10) nach einem der vorhergehenden Ansprüche, bei dem der Drahtabstand (d3) der Drähte (100) der äußeren Lage (98) größer oder gleich 25 µm oder sogar größer oder gleich 30 µm, bevorzugt größer oder gleich 40 µm und noch bevorzugter größer oder gleich 50 µm ist.

8. Reifen (10) nach einem der vorhergehenden Ansprüche, bei dem, wenn jedes Arbeitsseil (82, 84) mindestens eine innere Lage des Seils umfasst, die mindestens eine innere Litze (88) umfasst, und eine äußere Lage des Seils, die mehrere äußere Litzen (92) umfasst, jede äußere Litze (92) mindestens eine innere Lage (94) Drähte (96) umfasst und eine äußere Lage (98) Drähte (100), die schraubenlinienförmig um die innere Lage (94) Drähte (96) gewickelt sind, wobei die äußere Lage (98) Drähte (100) ungesättigt ist.

9. Reifen (10) nach einem der vorhergehenden Ansprüche, bei dem jede Arbeitseinlage (46, 48) eine Bruchkraft (Fm_{NST}) größer oder gleich 2000 daN.cm⁻¹, bevorzugt größer oder gleich 3500 daN.cm⁻¹, noch bevorzugter größer oder gleich 4000 daN.cm⁻¹ aufweist.

10. Reifen (10) nach einem der vorhergehenden Ansprüche, bei dem, wenn jede Arbeitseinlage (46, 48) Verstärkungselemente (54, 56), Arbeitsverstärkungselemente genannt, umfasst, jedes Arbeitsverstärkungselement (54, 56) eine Bruchkraft (Fr) größer oder gleich 15000 N, bevorzugt größer oder gleich 20000 N, noch bevorzugter größer oder gleich 25000 N aufweist.

11. Reifen (10) nach einem der vorhergehenden Ansprüche, bei dem, wenn jede Arbeitseinlage (46, 48) Verstärkungselemente (54, 56), Arbeitsverstärkungselemente genannt, umfasst, der Einlegeabstand der Arbeitsverstärkungselemente (54, 56) 3,5 bis 7,5 mm, bevorzugt 4,0 bis 7,0 mm und noch bevorzugter 4,5 bis 6,5 mm beträgt.

12. Reifen (10) nach einem der vorhergehenden Ansprüche, bei dem die Arbeitsverstärkungselemente (54, 56) einen Winkel von höchstens 60°, bevorzugt von 15° bis 40° mit der Umfangsrichtung des Reifens (10) bilden.

13. Reifen (10) nach einem der vorhergehenden Ansprüche, bei dem die Scheitelbewehrung (14) eine Umschnürungsbewehrung (39) umfasst, die mindestens eine Umschnürungseinlage (40, 41) umfasst.

14. Reifen (10) nach dem vorhergehenden Anspruch, bei dem jede Umschnürungseinlage (40, 41) Verstärkungselemente, Umschnürungsverstärkungselemente genannt, umfasst, wobei die Umschnürungsverstärkungselemente einen Winkel von höchstens 10°, bevorzugt 5° bis 10° mit der Umfangsrichtung des Reifens (10) bilden.

15. Reifen (10) nach Anspruch 13 oder 14, bei dem die Umschnürungsbewehrung (40) radial innerhalb der Arbeitsbewehrung (38) angeordnet ist.

## Claims

1. Tyre (10), comprising a tread (22) and a crown reinforcement (14) arranged radially on the inside of the tread (22), the crown reinforcement (14) comprising:
- a protective reinforcement (36) comprising at least one protective ply (42, 44) comprising reinforcing elements (50, 52) known as protective reinforcing elements, each protective reinforcing element exhibiting a force at break (Fr) greater than or equal to 3000 N;
- a working reinforcement (38) that is arranged radially on the inside of the protective reinforcement (36) and comprises at least one working ply (46, 48) comprising reinforcing elements (54, 56) known as working reinforcing elements,
**characterised in that**, the protective ply (42, 44) exhibits a force at break (Fm) greater than or equal to 1300 daN.cm⁻¹ and **in that** each working reinforcing element (54, 56) comprises a working cord (82, 84) comprising at least one strand (88, 92) comprising at least one internal layer (94) of threads (96) and an external layer (98) of threads (100) wrapped helically around the internal layer (94), the external layer (98) of threads (100) being unsaturated.

2. Tyre (10) according to the preceding claim, wherein the protective reinforcement (36) is interposed radially between the tread (22) and the working reinforcement (38).

3. Tyre (10) according to either one of the preceding claims, wherein the force at break (Fm) of each protective ply (42, 44) is greater than or equal to 1400 daN.cm⁻¹, preferably greater than or equal to 1500 daN.cm⁻¹ and more preferably greater than or equal to 1600 daN.cm⁻¹.

4. Tyre (10) according to any one of the preceding claims, wherein the force at break (Fr) of each protective reinforcing element (50, 52) is greater than or equal to 3500 N, preferably greater than or equal to 4500 N and more preferably greater than or equal to 5500 N.

5. Tyre (10) according to any one of the preceding claims, wherein the pitch at which the protective reinforcing elements are laid ranges from 1.2 to 6.5 mm, preferably from 2.5 to 5.0 mm, and more preferably from 3.5 to 4.5 mm.

6. Tyre (10) according to any one of the preceding claims, wherein the protective reinforcing elements (50, 52) make an angle at least equal to 10°, preferably in the range from 10° to 35° and more preferably from 15° to 35°, with the circumferential direction of the tyre (10).

7. Tyre (10) according to any one of the preceding claims, wherein the inter-thread distance (d3) of the threads (100) in the external layer (98) is greater than or equal to 25 µm, or even greater than or equal to 30 µm, preferably greater than or equal to 40 µm and more preferably greater than or equal to 50 µm.

8. Tyre (10) according to any one of the preceding claims, wherein, with each working cord (82, 84) comprising at least one internal layer of the cord comprising at least one internal strand (88) and an external layer of the cord comprising several external strands (92), each external strand (92) comprises at least one internal layer (94) of threads (96) and an external layer (98) of threads (100) wrapped helically around the internal layer (94) of threads (96), the external layer (98) of threads (100) being unsaturated.

9. Tyre (10) according to any one of the preceding claims, wherein each working ply (46, 48) exhibits a force at break (Fm_{NST}) greater than or equal to 2000 daN.cm⁻¹, preferably greater than or equal to 3500 daN.cm⁻¹ and more preferably greater than or equal to 4000 daN.cm⁻¹.

10. Tyre (10) according to any one of the preceding claims, wherein, with each working ply (46, 48) comprising reinforcing elements (54, 56) known as working reinforcing elements, each working reinforcing element (54, 56) exhibits a force at break (Fr) greater than or equal to 15 000 N, preferably greater than or equal to 20 000 N and more preferably greater than or equal to 25 000 N.

11. Tyre (10) according to any one of the preceding claims, wherein, with each working ply (46, 48) comprising reinforcing elements (54, 56) known as working reinforcing elements, the pitch at which the working reinforcing elements (54, 56) are laid ranges from 3.5 to 7.5 mm, preferably from 4.0 to 7.0 mm, and more preferably from 4.5 to 6.5 mm.

12. Tyre (10) according to any one of the preceding claims, wherein the working reinforcing elements (54, 56) make an angle at most equal to 60°, preferably in the range from 15° to 40°, with the circumferential direction of the tyre (10).

13. Tyre (10) according to any one of the preceding claims, wherein the crown reinforcement (14) comprises a hoop reinforcement (39) comprising at least one hooping ply (40, 41).

14. Tyre (10) according to the preceding claim, wherein each hooping ply (40, 41) comprises reinforcing elements known as hoop reinforcing elements, the hoop reinforcing elements making an angle at most equal to 10°, preferably in the range from 5° to 10°, with the circumferential direction of the tyre (10).

15. Tyre (10) according to Claim 13 or 14, wherein the hoop reinforcement (40) is arranged radially on the inside of the working reinforcement (38).
